# EUROPÄISCHE PATENTSCHRIFT

(11) **EP 4 403 015 B1**
(45) Veröffentlichungstag und Bekanntmachung des Hinweises auf die Patenterteilung: **16.07.2025**
(21) Anmeldenummer: 24401001.3
(22) Anmeldetag: 09.01.2024
(51) Int. Cl.: A01D 34/82, A01D 75/20, A01M 29/34

(54) **SCHUTZEINRICHTUNG ZUM AUFSCHEUCHEN VON INSEKTEN UND ZUM EINSATZ AN EINEM MÄHWERK AN EINER MÄHVORRICHTUNG SOWIE MÄHVORRICHTUNG**
PROTECTION DEVICE FOR SCARING OFF INSECTS AND FOR USE ON A MOWING UNIT OF A MOWING DEVICE, AND MOWING DEVICE
DISPOSITIF DE PROTECTION POUR EFFRAYER DES INSECTES ET DESTINÉ À ÊTRE UTILISÉ SUR UNE UNITÉ DE TONTE D'UNE FAUCHEUSE ET FAUCHEUSE

(30) Priorität: 18.01.2023 DE 102023101091
(43) Veröffentlichungstag der Anmeldung: 24.07.2024
(73) Patentinhaber: Amazonen-Werke H. Dreyer SE & Co. KG, 49205 Hasbergen (DE)
(72) Erfinder: Gette, Christophe, 49205 Hasbergen (FR); Staub, Pierre, 57380 FAULQUEMONT (FR)

(56) Entgegenhaltungen:
- CH-A5- 657 247
- DE-A1- 102020 118 051
- DE-A1- 102020 207 095
- DE-U1- 202015 006 431
- US-A1- 2019 133 090

## Beschreibung

Die Erfindung betrifft eine Schutzeinrichtung zum Aufscheuchen von Insekten und zum Einsatz an einem Mähwerk einer Mähvorrichtung sowie eine Mähvorrichtung zum Mähen von Gras und/oder zum Aufnehmen von Laub.

Bekanntermaßen führen Insektenmittel, die in der Landwirtschaft eingesetzt werden, zu geringeren Insektenpopulationen. Dies betrifft beispielsweise Pollenspender (wie z. B. Bienen).

Um die Anzahl an Pollenspendern nicht weiter zu reduzieren, fordern mittlerweile Kommunen und Gemeinden bei Ausschreibungen für Mähvorrichtungen mit denen z. B. Grünanlagen gepflegt werden, dass die Mähvorrichtungen einen Insektenschutz aufweisen, der Insekten aber im Besonderen Pollenspender vor Schaden bewahrt.

Vor diesem Hintergrund bietet beispielsweise die DE 10 2020 118 051 A1 einen Mähkopf mit beweglichen, vor dem Mähkopf positionierbaren, Scheuchelementen an. Die Scheuchelemente sind dabei als Ketten realisiert und an einem schwenkbaren oder verschiebbaren, insbesondere in der Aufsicht betrachtet U-förmigen Haltebügel befestigt. Genau genommen sind die Scheuchelemente zwischen einer aktivierten Stellung vor dem Mähkopf und einer deaktivierten Stellung auf dem Mähkopf verschwenkbar oder verschiebbar. Mithilfe der Scheuchelemente vor den tatsächlichen Mähwerkzeugen können Pollenspender von Blüten weggescheucht werden und somit vor Schaden bewahrt werden.

Allerdings ist diese Lösung unkomfortabel, da im Falle von Hindernissen, wie Beschilderungen in einem Park oder wie Bäume, der Fahrer eines Fahrzeuges mit oben erwähnten Mähkopf den Haltebügel mehrmals verschwenken muss, um möglichst nah an einem Schild zu mähen.

Die DE 20 2015 006 431 U1 und die CH 657 247 A5 beschreiben weitere gattungsgemäße Schutzeinrichtungen von Insekten.

Daher ist es Aufgabe der vorliegenden Erfindung, eine Schutzeinrichtung zum Aufscheuchen von Insekten und zum Einsatz an einem Mähwerk einer Mähvorrichtung sowie eine Mähvorrichtung zum Mähen von Gras und/oder zum Aufnehmen von Laub anzugeben, welche kostengünstig und materialsparend herstellbar ist sowie ein komfortables und somit schnelleres Mähen öffentlicher Grünflächen mit Bäumen und Schildern gewährleistet.

Diese Aufgabe wird durch die Merkmale der unabhängigen Patentansprüche gelöst. Weitere vorteilhafte Weiterbildungen sind Gegenstand der Unteransprüche.

Ein erster Aspekt der vorliegenden Erfindung umfasst eine Schutzeinrichtung zum Aufscheuchen von Insekten und zum Einsatz an einem Mähwerk einer Mähvorrichtung.

Die Schutzeinrichtung weist eine Scheucheinheit auf, mit welcher Insekten, wie z. B. Pollenspender oder wie z. B. Bienen, auf- und/oder verscheuchbar sind.

Zudem umfasst die Schutzeinrichtung wenigstens einen Haltearm mit einem ersten und einem zweiten Ende, wobei das erste Ende an einem Mähwerk einer Mähvorrichtung befestigbar ist. Somit kann also ein Haltearm bzw. dessen erstes Ende an einem Mähwerk einer Mähvorrichtung angebracht werden, um beispielsweise eine Scheucheinheit zu beabstanden.

Des Weiteren ist das zweite Ende derart mit der Scheucheinheit, z. B. direkt oder beispielsweise unmittelbar, verbunden, dass die Scheucheinheit und der wenigstens eine Haltearm relativ zueinander drehbar und/oder verschiebbar sind. Anders formuliert sind die Scheucheinheit und das zweite Ende des wenigstens einen Haltearms relativ zueinander drehbar und/oder verschiebbar. Dies bietet den Vorteil, dass der Abstand zwischen einem Mähwerk einer Mähvorrichtung und der Scheucheinheit, welcher von dem wenigstens einen Haltearm bestimmt wird, veränderbar ist. Und zwar ist der Abstand dergestalt veränderbar, dass das zweite Ende des wenigstens einen Haltearms und die Scheucheinheit nicht nur relativ zueinander drehen können, sondern auch noch zueinander verschiebbar sind. So ist der Abstand zwischen einem Mähwerk einer Mähvorrichtung und der Scheucheinheit nicht nur durch Rotation der Scheucheinheit relativ zu einem Mähwerk einer Mähvorrichtung veränderbar, sondern kann auch durch Verschieben der Scheucheinheit in Richtung eines Mähwerks einer Mähvorrichtung verändert werden. Somit ist die Schutzeinrichtung beim Mähen auf engem Raum mit Hindernissen, wie z. B. Bäumen oder Schildermasten, hervorragend geeignet, da die Schutzeinrichtung ein Mähen nah am Hindernis ermöglicht, ohne dass ein Fahrer eines Fahrzeuges mit oben erwähnter Schutzeinrichtung die Scheucheinheit manuell bewegen muss, um z. B. möglichst nah an einem Schild zu mähen. In der Folge kann ein komfortables und somit schnelleres Mähen öffentlicher Grünflächen mit Bäumen und Schildern gewährleistet werden.

Des Weiteren umfasst die Scheucheinheit erfindungsgemäß einen Querträger, der für den wenigstens einen Haltearm eine Kulissenführung aufweist, in welcher das zweite Ende des wenigstens einen Haltearms angeordnet ist. Die Kulissenführung kann derart angeordnet sein, dass das zweite Ende des wenigstens einen Haltearms zumindest einen Freiheitsgrad aufweist, der in etwa quer zu einer Fahrt- und/oder Arbeitsrichtung einer Mähvorrichtung orientiert sein kann. Mit anderen Worten ausgedrückt, kann das zweite Ende mittels der Kulissenführung in beweglicher Weise gegenüber der Scheucheinheit, oder z. B. gegenüber dem Querträger, gelagert sein. Die Kulissenführung erlaubt somit eine Verschiebung und/oder Drehung bzw. Rotation des wenigstens einen Haltearms relativ zur Scheucheinheit.

Zudem kann das zweite Ende mittels eines Bolzens in der Kulissenführung geführt werden. Dies ist eine einfache mechanische Umsetzung.

Bei einer relativen Verschiebung der Scheucheinheit kann die Scheucheinheit ferner dazu eingerichtet sein, den wenigstens einen Haltearm um das wenigstens eine erste Ende zu verdrehen oder drehen. Mit anderen Worten geschildert, kann bei einer Verschiebung der Scheucheinheit der gesamte Haltearm drehen. Somit ist ein besonders großer Verstell- und/oder Verschiebeweg der Scheucheinheit relativ zu einem Mähwerk einer Mähvorrichtung erreichbar.

Alternativ oder zusätzlich ist der wenigstens eine Haltearm erfindungsgemäß längen-veränderlich ausgebildet.

So kann der wenigstens eine Haltearm teleskopierbar und/oder nach Art eines Feder- und/oder Dämpferelements, wie z. B. nach Art einer Gasfeder, wie sie beispielsweise bei einem Kofferraumdeckel oder z. B. bei einem Bürostuhl Anwendung findet, ausgeführt sein. Dabei kann sich der wenigstens eine Haltearm ähnlich einem Rohr in eine Richtung, entlang welcher der Haltearm längen-veränderlich ausgebildet sein kann, oder entlang seiner Längsachse, entlang welcher der Haltearm längen-veränderlich ausgebildet sein kann, erstrecken. Der wenigstens eine Haltearm ist dabei erfindungsgemäß dazu eingerichtet, seine Länge bei einer Kollision der Scheucheinheit mit einem Hindernis selbsttätig zu verändern. Bevorzugt ist der wenigstens eine Haltearm dabei dazu eingerichtet, seine ursprüngliche Länge und/oder Ausgangsstellung nach der Kollision selbsttätig wieder anzufahren und/oder einzunehmen.

Der Querträger kann ein U-Profil aufweisen, wobei die gleichorientierten Schenkel des U-Profils die Kulissenführung aufweisen können. Somit ist eine stabile Führung des wenigstens einen Haltearms in der Kulissenführung möglich, wobei ein U-Profil zu geringen Kosten beschaffbar ist.

Außerdem kann die Scheucheinheit einen Träger für wenigstens ein Scheuchelement umfassen. Dabei kann das Scheuchelement dazu dienen, in direkten Kontakt mit Gras und/oder Blumen bzw. mit einer Wiese und den dort wachsenden Pflanzen zu gelangen, um die Pflanzen zu bewegen, sodass Pollenspender wie z. B. Bienen oder andere Insekten aufgescheucht werden und die Flucht ergreifen.

Der Träger kann als Rohr ausgebildet sein. Dies ist eine einfache und kostengünstige Umsetzung.

Der Träger kann relativ drehbar ausgebildet und/oder gleichorientiert zu einem Querträger der Scheucheinheit ausgerichtet sein.

Dabei kann die Scheucheinheit zwei Lager umfassen, in welchen der Träger drehbar gelagert ist.

Die zwei Lager können an einem Querträger der Scheucheinheit angeordnet sein, beispielsweise an einem Verbindungsschenkel eines U-Profils des Querträgers, der zwei gleichorientierte Schenkel verbindet. Dies vereinfacht den Aufbau.

Des Weiteren kann die Scheucheinheit einen ersten Rastmechanismus aufweisen, mit welchem wenigstens zwei unterschiedliche Positionen eines Trägers der Scheucheinheit relativ zu einem Querträger der Scheucheinheit einnehmbar oder einstellbar sind.

Der erste Rastmechanismus kann einen Rastbolzen und wenigstens zwei Rastlöcher, in die der Rastbolzen einrastbar ist, aufweisen, um wenigstens zwei unterschiedliche Positionen einzustellen. Somit sind also wenigstens zwei unterschiedliche Positionen eines Trägers relativ zu einem Querträger der Scheucheinheit einstellbar, an dem der Träger mittels zweier Lager befestigbar ist.

Ein Träger der Scheucheinheit kann wenigstens zwei Rastlöcher aufweisen.

Die wenigstens zwei Rastlöcher können an unterschiedlichen Positionen des Umfangs eines Trägers der Scheucheinheit angeordnet sein, sodass durch Drehen des Trägers ein Rastloch auswählbar ist. Dadurch ist die Position des Trägers relativ zu einem Querträger der Scheucheinheit festlegbar.

Zudem kann mithilfe des ersten Rastmechanismus eine Transportposition einstellbar sein, in welcher wenigstens ein Scheuchelement der Scheucheinheit entgegengesetzt zum Erdboden orientiert ist.

Ferner kann mithilfe des ersten Rastmechanismus eine erste Arbeitsposition einstellbar sein, in welcher wenigstens ein Scheuchelement der Scheucheinheit unter einem ersten Winkel zum Erdboden orientiert ist.

Auch kann mithilfe des ersten Rastmechanismus eine zweite Arbeitsposition einstellbar sein, in welcher wenigstens ein Scheuchelement der Scheucheinheit unter einem zweiten Winkel zum Erdboden orientiert ist.

Dabei kann der zweite Winkel kleiner ausgebildet sein als der erste Winkel. Somit kann auf die unterschiedliche Länge von Bewuchs auf einer Wiese oder auf einer Grünfläche eingegangen werden.

Der erste Winkel kann 80, 90 oder 100 Grad mit dem Erdboden oder mit dem wenigstens einen Haltearm einschließen.

Der zweite Winkel kann 70, 60, 50 oder 40 Grad mit dem Erdboden oder mit dem wenigstens einen Haltearm einschließen.

Dabei ist es generell von Vorteil, einen möglichst kleinen Winkel einzustellen, wenn die Geschwindigkeit einer Mähvorrichtung höher gewählt wird und/oder wenn der Bewuchs auf einer Wiese eine bestimmte Höhe erreicht hat, bei der z. B. die Scheucheinheit einen geringeren Abstand zum Erdboden aufweist als die Spitzen des Bewuchses der Wiese.

Des Weiteren kann die Scheucheinheit wenigstens ein Scheuchelement umfassen. Dabei kann das Scheuchelement dazu dienen, in direkten Kontakt mit Gras und/oder Blumen bzw. mit einer Wiese und den dort wachsenden Pflanzen zu gelangen, um die Pflanzen zu bewegen, sodass Pollenspender wie z. B. Bienen oder andere Insekten aufgescheucht werden und die Flucht ergreifen.

Das wenigstens eine Scheuchelement kann an einem Träger der Scheucheinheit befestigt sein.

Dabei kann das wenigstens eine Scheuchelement als Federelement ausgebildet sein, das nach Krafteinwirkung in seine ursprüngliche Position zurückfedert.

Ferner kann das wenigstens eine Scheuchelement oder das Federelement in Gestalt einer Zinke oder einer Haspelzinke ausgebildet sein.

Zudem kann das wenigstens eine Scheuchelement aus Kunststoff ausgebildet sein oder das wenigstens eine Scheuchelement kann als Kette ausgebildet sein.

Des Weiteren kann der wenigstens eine Haltearm einen Anschlag aufweisen, mit welchem der wenigstens eine Haltearm gegen einen Stützrahmen eines Mähwerks einer Mähvorrichtung anschlagbar ist, um die Bewegung des Haltearms zu begrenzen.

Der Anschlag kann am ersten Ende des wenigstens einen Haltearms angeordnet sein.

Auch kann der Anschlag als Kragarm ausgebildet sein, der sich beispielsweise von dem wenigstens einen Haltearm wegerstreckt.

An dem Anschlag kann ein Gummipuffer zum schonenden Anschlagen gegen einen Stützrahmen eines Mähwerks einer Mähvorrichtung angeordnet sein.

Des Weiteren kann die Scheucheinheit einen zweiten Rastmechanismus aufweisen, mit welchem die Scheucheinheit an dem wenigstens einen Haltearm verrastbar ist.

Der zweite Rastmechanismus kann eine erste Durchführung und eine in diese einführbaren Raststift aufweisen. Dabei kann die erste Durchführung in einem Querträger der Scheucheinheit angeordnet sein.

Ferner kann der zweite Rastmechanismus eine Rasteinheit am wenigstens einen Haltearm aufweisen. Die Rasteinheit kann ein Blech mit einer zweiten Durchführung für einen Raststift umfassen.

Die Rasteinheit kann am ersten Ende des wenigstens einen Haltearms angeordnet sein. Somit lässt sich eine Transportposition der Schutzeinrichtung realisieren.

Ferner kann mit dem zweiten Rastmechanismus der wenigstens eine Haltearm so fixierbar sein, dass ein relatives Verschieben oder Verdrehen zwischen Scheucheinheit und wenigstens einem Haltearm unterbindbar ist.

Ein zweiter Aspekt der vorliegenden Erfindung umfasst eine Mähvorrichtung zum Mähen von Gras und/oder zum Aufnehmen von Laub.

Es wird ausdrücklich darauf hingewiesen, dass die Merkmale der Schutzeinrichtung, wie sie unter dem ersten Aspekt erwähnt werden, einzeln oder miteinander kombinierbar bei der Mähvorrichtung Anwendung finden können.

Anders ausgedrückt, die oben unter dem ersten Aspekt der Erfindung genannten Merkmale betreffend die Schutzeinrichtung können auch hier unter dem zweiten Aspekt der Erfindung mit weiteren Merkmalen kombiniert werden.

So umfasst eine Mähvorrichtung zum Mähen von Gras und/oder zum Aufnehmen von Laub eine Schutzeinrichtung nach dem ersten Aspekt und ein Mähwerk, das z. B. als Horizontal-Mähwerk oder als Kreisel-Mähwerk ausgebildet sein kann. Dabei ist die Schutzeinrichtung an dem Mähwerk angeordnet.

Ferner kann das Mähwerk ein Feder- und/oder Dämpferelement pro Haltearm der Schutzvorrichtung aufweisen, um die Haltearme in eine Insektenschutzposition vorzuspannen.

Das Feder- und/oder Dämpferelement kann als Gasfeder ausgebildet sein, wie sie beispielsweise bei einem Kofferraumdeckel oder z. B. bei einem Bürostuhl Anwendung findet. Somit ist ein Zusammenschieben der Gasfeder mit bestimmter Geschwindigkeit und Kraft einstellbar, wobei ebenfalls eine Rückstellung in eine Position stets gewährleistbar ist.

Auch kann das Feder- und/oder Dämpferelement ein erstes und ein zweites Ende umfassen, wobei das erste Ende an dem wenigstens einen Haltearm der Schutzeinrichtung befestigt sein kann. Das zweite Ende kann an einem Stützrahmen des Mähwerks befestigt sein.

Zudem kann das Mähwerk einen Stützrahmen umfassen, an welchem Stützräder drehbar befestigt sein können. Diese dienen dem Abstützen des Gewichts des Mähwerks.

Das Mähwerk kann zwei Stützräder umfassen, an deren Drehachsen jeweils ein Haltearm der Schutzeinrichtung drehbar befestigt ist.

Der Stützrahmen kann zwei Halteelemente, jeweils ausbildbar als U-förmiger Haltebügel, umfassen, an denen jeweils ein zweites Ende eines Feder- und/oder Dämpferelements des Mähwerks befestigt ist.

Der Stützrahmen kann zudem die Schutzeinrichtung derart vom Erdboden beabstanden, dass wenigstens ein Scheuchelement der Scheucheinheit der Schutzeinrichtung kontaktlos über den Erdboden verfahrbar ist.

Ferner können die zwei Haltearme der Schutzeinrichtung, zwei Feder- und/oder Dämpferelemente und die zwei Halteelemente derart relativ zueinander positioniert und ausgebildet sein, dass die Schutzeinrichtung in eine Beförderungsposition und in eine Insektenschutzposition bringbar ist.

In der Beförderungsposition kann die Schutzeinrichtung einen ersten Abstand zum Mähwerk aufweisen.

Dabei kann in der Beförderungsposition ein zweiter Rastmechanismus der Schutzeinrichtung verriegelt sein, indem ein Raststift des zweiten Rastmechanismus der Schutzeinrichtung das erste Ende des wenigstens einen Haltearms mit der Scheucheinheit verbindet. Dadurch kann das zweite Ende des wenigstens einen Haltearms einen ersten Abstand zum Mähwerk aufweisen.

In der Insektenschutzposition kann die Schutzeinrichtung einen zweiten Abstand zum Mähwerk aufweisen.

Dabei kann in der Insektenschutzposition ein zweiter Rastmechanismus der Schutzeinrichtung entriegelt sein, indem ein Raststift des zweiten Rastmechanismus die Verbindung zwischen dem ersten Ende des wenigstens einen Haltearms und der Scheucheinheit löst. Dadurch kann das zweite Ende des wenigstens einen Haltearms einen zweiten Abstand zum Mähwerk aufweisen.

Ferner kann der erste Abstand zwischen Scheucheinheit und Mähwerk kleiner sein als der zweite Abstand zwischen Scheucheinheit und Mähwerk. Dadurch kann Volumen eingespart werden, wodurch der Transport einer Mähvorrichtung einfacher durchführbar ist.

Des Weiteren kann die Mähvorrichtung zum Mähen von Gras und/oder zum Aufnehmen von Laub so eingerichtet und ausgebildet sein, dass beim Kontaktieren eines Hindernisses mit der Schutzeinrichtung das Mähwerk abschaltbar ist und/oder die Fahrgeschwindigkeit der Mähvorrichtung reduzierbar ist. Auch kann automatisch die Fahrtrichtung der Mähvorrichtung umkehrbar sein, um die Mähvorrichtung automatisch von einem Hindernis zurückzusetzen.

Dazu kann die Mähvorrichtung und/oder die Schutzeinrichtung mindestens eine Sensoreinrichtung oder jeweils eine Sensoreinrichtung aufweisen, die eine Bewegung der Schutzeinrichtung relativ zum Mähwerk oder die eine Bewegung der Schutzeinrichtung und eine Bewegung des Mähwerks erfassen kann.

Die mindestens eine Sensoreinrichtung kann einen Beschleunigungsmesser aufweisen.

Des Weiteren kann die Mähvorrichtung eine Steuerungseinheit aufweisen, die mit der mindestens einen Sensoreinrichtung verbunden ist, um die Daten der mindestens einen Sensoreinrichtung zu erhalten.

Die Steuerungseinheit kann bei bestimmten Werten, die von der mindestens einen Sensoreinrichtung empfangen werden, z. B. die Fahrgeschwindigkeit der Mähvorrichtung reduzieren und/oder die Fahrtrichtung umkehren und/oder das Mähwerk abschalten.

Ebenso kann die Steuerungseinheit durch Vergleich der Daten mindestens einer Sensoreinrichtung der Schutzeinrichtung und mindestens einer Sensoreinrichtung des Mähwerks der Mähvorrichtung dazu ausgebildet sein, die relative Beschleunigung der Schutzeinrichtung zum Mähwerk zu ermitteln, um somit auf ein Hindernis zu schließen. Somit ist eine noch genauere Erfassung eines Hindernisses, das gegen die Schutzeinrichtung bzw. deren Scheucheinheit fährt, erfassbar.

Ein dritter Aspekt der vorliegenden Erfindung umfasst eine Mähvorrichtung zum Mähen von Gras und/oder zum Aufnehmen von Laub.

Es wird ausdrücklich darauf hingewiesen, dass die Merkmale der Schutzeinrichtung, wie sie unter dem ersten Aspekt erwähnt werden, einzeln oder miteinander kombinierbar bei der Mähvorrichtung Anwendung finden können.

Anders ausgedrückt, die oben unter dem ersten Aspekt der Erfindung genannten Merkmale betreffend die Schutzeinrichtung können auch hier unter dem dritten Aspekt der Erfindung mit weiteren Merkmalen kombiniert werden.

Zudem wird darauf hingewiesen, dass die Merkmale der Mähvorrichtung, wie sie unter dem zweiten Aspekt erwähnt werden, einzeln oder miteinander kombinierbar bei der Mähvorrichtung nach dem dritten Aspekt Anwendung finden können.

Anders ausgedrückt, die oben unter dem zweiten Aspekt der Erfindung genannten Merkmale betreffend die Mähvorrichtung können auch hier unter dem dritten Aspekt der Erfindung mit weiteren Merkmalen kombiniert werden.

Eine Mähvorrichtung zum Mähen von Gras und/oder zum Aufnehmen von Laub umfasst ein Mähwerk und eine Schutzeinrichtung mit einer Scheucheinheit, mit welcher Insekten, wie z. B. Pollenspender oder wie z. B. Bienen, auf- und/oder verscheuchbar sind. Dabei kann die Schutzeinrichtung wenigstens einen Haltearm mit einem ersten und einem zweiten Ende umfassen, wobei das zweite Ende an der Scheucheinheit befestigbar ist. Das erste Ende des wenigstens einen Haltearm kann derart mit dem Mähwerk verbunden sein, dass das Mähwerk und der wenigstens eine Haltearm relativ zueinander drehbar und/oder verschiebbar sind. Dies bietet den Vorteil, dass der Abstand zwischen dem Mähwerk und der Scheucheinheit, welcher von dem wenigstens einen Haltearm bestimmt wird, veränderbar ist. Und zwar ist der Abstand dergestalt veränderbar, dass das erste Ende des wenigstens einen Haltearms und das Mähwerk nicht nur relativ zueinander drehen können, sondern auch noch zueinander verschiebbar sind. So ist der Abstand zwischen dem Mähwerk und der Scheucheinheit nicht nur durch Rotation der Scheucheinheit relativ zum Mähwerk veränderbar, sondern kann auch durch Verschieben der Scheucheinheit in Richtung des Mähwerks verändert werden. Somit ist die Mähvorrichtung beim Mähen auf engem Raum mit Hindernissen, wie z. B. Bäumen oder Schildermasten, hervorragend geeignet, da die Mähvorrichtung ein Mähen nah am Hindernis ermöglicht. In der Folge kann ein komfortables und somit schnelleres Mähen öffentlicher Grünflächen mit Bäumen und Schildern gewährleistet werden.

Das Mähwerk kann einen Stützrahmen umfassen, an welchem Stützräder drehbar befestigt sein können. Diese dienen dem Abstützen des Gewichts des Mähwerks.

Das Mähwerk oder dessen Stützrahmen kann eine Kulissenführung aufweisen, in welcher das erste Ende des wenigstens einen Haltearms angeordnet ist. Die Kulissenführung kann derart angeordnet sein, dass das erste Ende des wenigstens einen Haltearms zumindest einen Freiheitsgrad aufweist, der in etwa quer oder in etwa längs zu einer Fahrt- und/oder Arbeitsrichtung der Mähvorrichtung orientiert sein kann. Mit anderen Worten ausgedrückt, kann das erste Ende mittels der Kulissenführung in beweglicher Weise gegenüber dem Mähwerk, oder z. B. gegenüber dem Stützrahmen des Mähwerks, gelagert sein. Die Kulissenführung erlaubt somit eine Verschiebung und/oder Drehung bzw. Rotation des wenigstens einen Haltearms relativ zum Mähwerk.

Zudem kann das erste Ende mittels eines Bolzens in der Kulissenführung geführt werden. Dies ist eine einfache mechanische Umsetzung.

Bei einer relativen Verschiebung der Scheucheinheit kann das Mähwerk oder dessen Stützrahmen, an welchem der wenigstens eine Haltearm anordenbar ist, ferner dazu eingerichtet sein, den wenigstens einen Haltearm um das wenigstens eine zweite Ende zu verdrehen. Mit anderen Worten geschildert, kann bei einer Verschiebung der Scheucheinheit der gesamte Haltearm gedreht werden. Somit ist ein besonders großer Verstell- und/oder Verschiebeweg der Scheucheinheit relativ zum Mähwerk der Mähvorrichtung erreichbar.

Alternativ oder zusätzlich kann der wenigstens eine Haltearm längen-veränderlich ausgebildet sein. So kann der wenigstens eine Haltearm teleskopierbar und/oder nach Art eines Feder- und/oder Dämpferelements, wie z. B. nach Art einer Gasfeder, wie sie beispielsweise bei einem Kofferraumdeckel oder z. B. bei einem Bürostuhl Anwendung findet, ausgeführt sein. Dabei kann sich der wenigstens eine Haltearm ähnlich einem Rohr in eine Richtung, entlang welcher der Haltearm längen-veränderlich ausgebildet sein kann, oder entlang seiner Längsachse erstrecken.

Des Weiteren kann die Scheucheinheit einen Querträger umfassen, an welchem das zweite Ende des wenigstens einen Haltearms angeordnet ist. Das zweite Ende des wenigstens einen Haltearms kann an der Scheucheinheit oder an dessen Querträger drehbar- und/oder verschiebbar angeordnet sein.

Betreffend weiter Ausgestaltungen zur Scheucheinheit und/oder zur Schutzeinrichtung wird auf den ersten Aspekt der Erfindung verwiesen. Die dort ausgeführten Merkmale können auch hier im dritten Aspekt in analogerweise für die Scheucheinheit bzw. die Schutzeinrichtung verwendet werden.

In der vorliegenden Beschreibung sind Formulierungen wie "in etwa quer" oder "in etwa längs" so zu verstehen, dass wenigstens eine 10-prozentige Abweichung von einer idealen Längs- oder Querrichtung umfasst sein kann.

Nachstehend wird die Erfindung anhand eines Ausführungsbeispiels in Verbindung mit zugehörigen Zeichnungen näher erläutert. Hierbei zeigen schematisch:
- Fig. 1: eine Seitenansicht auf eine Mähvorrichtung zum Mähen von Gras und/oder zum Aufnehmen von Laub mit einer Schutzeinrichtung in einer Beförderungsposition;
- Fig. 2: eine Seitenansicht auf die Mähvorrichtung aus Figur 1 mit der Schutzeinrichtung 1 in einer Insektenschutzposition;
- Fig. 3: eine weitere Seitenansicht auf die Mähvorrichtung aus Figur 1;
- Fig. 4: eine räumliche Vorderansicht auf die Mähvorrichtung aus Figur 1;
- Fig. 5: eine räumliche Vorderansicht auf die Mähvorrichtung aus Figur 2;
- Fig. 6: eine räumliche Rückansicht der Mähvorrichtung aus Figur 5 bzw. aus Figur 2;
- Fig. 7a) bis 7e): eine Draufsicht auf die Mähvorrichtung aus Figur 6 in verschiedenen Positionen relativ zu einem Hindernis;
- Fig. 8a) und 8b): eine Draufsicht auf die Mähvorrichtung in einer zweiten Ausführungsform und in verschiedenen Positionen relativ zu einem Hindernis; und
- Fig. 9a) und 9b): eine Draufsicht auf die Mähvorrichtung in einer dritten Ausführungsform und in verschiedenen Positionen relativ zu einem Hindernis.

In der nachfolgenden Beschreibung werden gleiche Bezugszeichen für gleiche Gegenstände verwendet.

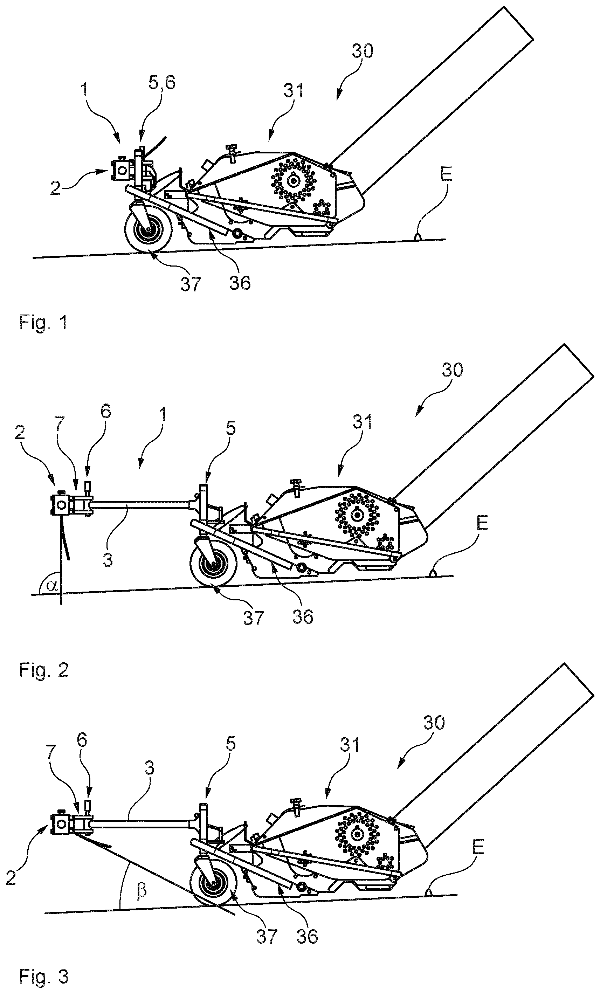

Figur 1 zeigt eine Seitenansicht auf eine Mähvorrichtung 30 zum Mähen von Gras und/oder zum Aufnehmen von Laub mit einer Schutzeinrichtung 1 in einer Beförderungsposition, wobei Figur 2 eine Seitenansicht auf die Mähvorrichtung 30 aus Figur 1 mit der Schutzeinrichtung 1 in einer Insektenschutzposition darstellt.

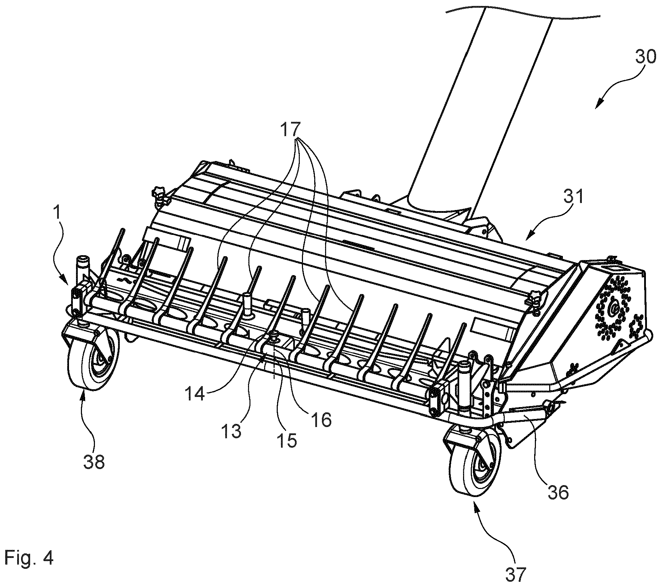

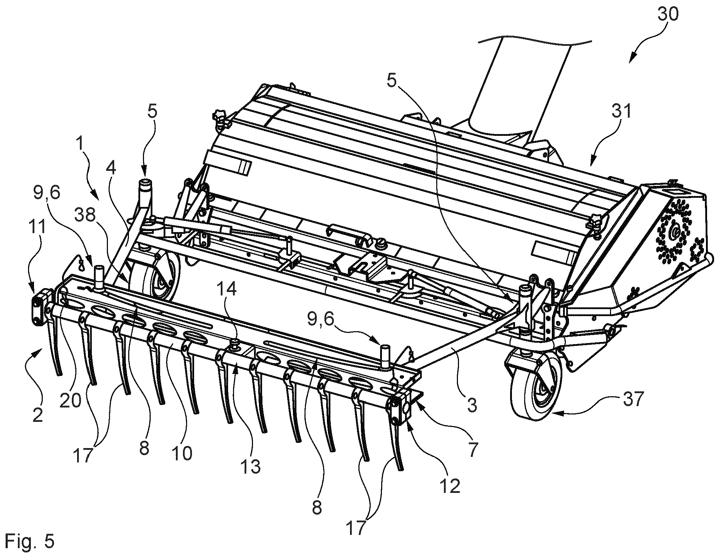

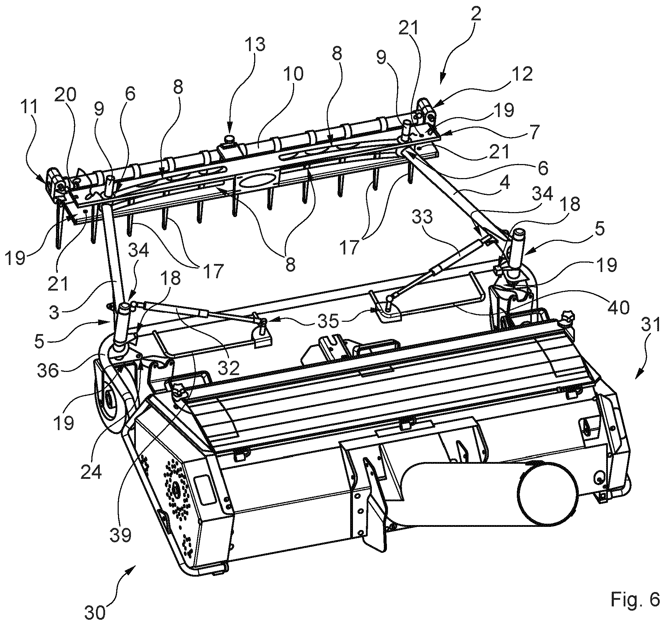

Des Weiteren zeigt Figur 3 eine weitere Seitenansicht auf die Mähvorrichtung 30 aus Figur 1. Figur 4 zeigt eine räumliche Vorderansicht auf die Mähvorrichtung 30 aus Figur 1, Figur 5 eine räumliche Vorderansicht auf die Mähvorrichtung 30 aus Figur 2, und Figur 6 zeigt eine räumliche Rückansicht der Mähvorrichtung 30 aus Figur 5 bzw. aus Figur 2.

Nachstehend werden die Figuren 1 bis 6 der Einfachheit und Kürze halber gemeinsam beschrieben.

Konkret zeigen die Figuren 1 bis 6 eine Mähvorrichtung 30 zum Mähen von Gras und/oder zum Aufnehmen von Laub.

Dabei hat die Mähvorrichtung 30 eine Schutzeinrichtung 1 und ein Mähwerk 31, das als Horizontal-Mähwerk oder als Kreiselmähwerk ausgebildet sein kann. Die Schutzeinrichtung 1 ist an dem Mähwerk 31 angeordnet.

Bei der Schutzeinrichtung 1 handelt es sich um eine Schutzeinrichtung 1 zum Aufscheuchen von Insekten und zum Einsatz an einem Mähwerk 31 einer Mähvorrichtung 30.

Die Schutzeinrichtung 1 hat gemäß den Figuren 1 bis 6 eine Scheucheinheit 2, mit welcher Insekten, wie Pollenspender oder wie z. B. z. B. Bienen, auf- und/oder verscheuchbar sind.

Ferner hat die Schutzeinrichtung 1 zwei Haltearme 3, 4 mit jeweils einem ersten und einen zweiten Ende 5, 6, wobei das erste Ende 5 an dem Mähwerk 31 der Mähvorrichtung 30 befestigt ist. Das zweite Ende 6 hingegen ist derart mit der Scheucheinheit 2 verbunden, dass die Scheucheinheit 2 und die Haltearme 3, 4 relativ zueinander drehbar und verschiebbar sind. Dies bietet den Vorteil, dass der Abstand zwischen dem Mähwerk 31 und der Scheucheinheit 2, welcher von den Haltearmen bestimmt wird, veränderbar ist. Und zwar ist der Abstand dergestalt veränderbar, dass das zweite Ende 6 der Haltearme 3, 4 und die Scheucheinheit 2 nicht nur relativ zueinander drehen können, sondern auch noch zueinander verschiebbar sind. So ist der Abstand zwischen dem Mähwerk 31 und der Scheucheinheit 2 nicht nur durch Rotation der Scheucheinheit 2 relativ zum Mähwerk 31 veränderbar, sondern kann auch durch Verschieben der Scheucheinheit 2 in Richtung des Mähwerks 31 verändert werden. Somit ist die Schutzeinrichtung 1 beim Mähen auf engem Raum mit Hindernissen, wie z. B. Bäumen oder Schildermasten, hervorragend geeignet, da die Schutzeinrichtung 1 ein Mähen nah am Hindernis ermöglicht.

Wie z. B. in den Figuren 1 bis 3 dargestellt, aber auch wie in den Figuren 4 bis 6 gezeigt, umfasst die Scheucheinheit 2 einen Querträger 7, der für die Haltearme 3, 4 jeweils eine Kulissenführung 8 aufweist, in welcher das zweite Ende 6 eines Haltearm 3, 4 angeordnet ist.

Dabei wird das zweite Ende 6 mittels eines Bolzens 9 in der Kulissenführung 8 geführt (vgl. Figuren 5, 6).

Des Weiteren zeigen die Figuren 1 bis 6, im Besonderen Figuren 1 bis 3, dass der Querträger 7 ein U-Profil aufweist, wobei die gleichorientierten Schenkel des U-Profils die Kulissenführung 8 aufweisen.

Ferner geht aus den Figuren hervor, dass die Scheucheinheit 2 einen Träger 10 für Scheuchelemente 17 umfasst, wobei der Träger 10 als Rohr ausgebildet ist. Zudem ist der Träger 10 relativ drehbar ausgebildet und gleichorientiert zum Querträger 7 der Scheucheinheit 2 ausgerichtet.

Außerdem umfasst die Scheucheinheit 2 zwei Lager 11, 12, in welchen der Träger 10 drehbar gelagert ist. Die zwei Lager 11, 12 sind an dem Querträger 7 der Scheucheinheit 2 angeordnet bzw. an einem Verbindungsschenkel des U-Profils des Querträgers 7, der zwei gleichorientierte Schenkel verbindet.

Des Weiteren zeigen die Figuren 5 und 6, dass die Scheucheinheit 2 einen ersten Rastmechanismus 13 aufweist, mit welchem mehrere unterschiedliche Positionen des Trägers 10 der Scheucheinheit 2 relativ zum Querträger 7 der Scheucheinheit 2 einnehmbar oder einstellbar sind.

Dabei weist der erste Rastmechanismus 13 einen Rastbolzen 14 und mehrere Rastlöcher 15,16, in die der Rastbolzen 14 einrastbar ist, auf (vgl. Figur 4), um unterschiedliche Positionen einzustellen. Genau genommen weist der Träger 10 der Scheucheinheit 2 die Rastlöcher 15, 16 auf. Hierbei sind die Rastlöcher 15, 16 an unterschiedlichen Positionen des Umfangs des Trägers 10 der Scheucheinheit 2 angeordnet, sodass durch Drehen des Trägers 10 ein bestimmtes Rastloch 15, 16 auswählbar ist (vgl. Figur 4).

Mithilfe des ersten Rastmechanismus 13 ist eine Transportposition einstellbar, in welcher die Scheuchelemente 17 der Scheucheinheit 2 entgegengesetzt zum Erdboden E orientiert sind (vgl. Figuren 1 und 4).

Zudem ist mithilfe des ersten Rastmechanismus 13 eine erste Arbeitsposition einstellbar ist, in welcher die Scheuchelemente 17 der Scheucheinheit 2 unter einem ersten Winkel α zum Erdboden E orientiert sind (vgl. Figur 2).

Ferner ist mithilfe des ersten Rastmechanismus 13 eine zweite Arbeitsposition einstellbar, in welcher die Scheuchelemente 17 der Scheucheinheit 2 unter einem zweiten Winkel β zum Erdboden E orientiert sind (vgl. Figur 3).

Dabei ist im Vergleich der Figuren 2 und 3 der zweite Winkel β kleiner ausgebildet ist als der erste Winkel α, wobei der erste Winkel α 90 Grad mit dem Erdboden E und der zweite Winkel β 40 Grad mit dem Erdboden E einschließt.

Wie bereits erwähnt, hat die Scheucheinheit 2 mehrere Scheuchelemente 17, die an dem Träger 10 der Scheucheinheit 2 befestigt sind.

Dabei sind die Scheuchelemente 17 jeweils als Federelement ausgebildet, die nach Krafteinwirkung in ihre ursprüngliche Position zurückfedern. Die Scheuchelemente 17 sind in Gestalt einer Zinke oder einer Haspelzinke und aus Kunststoff ausgebildet. Alternativ können die Scheuchelemente 17 als Kette ausgebildet sein.

Des Weiteren zeigt Figur 6, dass jeder Haltearm 3, 4 einen Anschlag 18 aufweist, mit welchem ein Haltearm 3, 4 gegen einen Stützrahmen 36 des Mähwerks 31 der Mähvorrichtung 30 anschlagbar ist, um die Bewegung des Haltearms 3, 4 zu begrenzen.

Der Anschlag 18 ist dabei am ersten Ende 5 eines Haltearms 3, 4 angeordnet und als Kragarm ausgebildet, der sich von der Haltearm 3, 4 wegerstreckt.

An den Anschlägen 18 ist jeweils ein Gummipuffer zum schonenden Anschlagen gegen einen Stützrahmen 36 des Mähwerks 31 der Mähvorrichtung 30 angeordnet.

Ferner zeigt Figur 6, dass die Scheucheinheit 2 einen zweiten Rastmechanismus 19 aufweist, mit welchem die Scheucheinheit 2 an den Haltearmen 3, 4 verrastbar ist.

Der zweite Rastmechanismus 19 hat eine erste Durchführung 21 und eine in diese einführbaren Raststift 20, wobei die erste Durchführung 21 im Querträger 7 der Scheucheinheit 2 angeordnet ist (vgl. Figur 6).

Zudem hat der zweite Rastmechanismus 19 jeweils eine Rasteinheit 22 an den Haltearmen 3, 4, wobei die Rasteinheit 22 ein Blech 23 mit einer zweiten Durchführung 24 für den Raststift 20 umfasst. Dabei ist die Rasteinheit 22 am ersten Ende 5 jedes Haltearms 3, 4 angeordnet.

Mit dem zweiten Rastmechanismus 19 sind die Haltearme 3, 4 so fixierbar, dass ein relatives Verschieben oder Verdrehen zwischen Scheucheinheit 2 und Haltearmen 3, 4 unterbindbar ist (vgl. Figur 4).

Gemäß den Figuren 5 und 6 hat das Mähwerk 31 ein Feder- und Dämpferelement 32, 33 pro Haltearm 3, 4 der Schutzvorrichtung 1, um die Haltearme 3, 4 in eine Insektenschutzposition vorzuspannen (vgl. Figuren 6 und 2, 3).

Dabei ist jedes Feder- und Dämpferelement 32, 33 als Gasfeder ausgebildet. Ferner umfasst jedes Feder- und Dämpferelement 32, 33 ein erstes und ein zweites Ende 34, 35, wobei das erste Ende 34 an dem Haltearm 3, 4 und das zweite Ende 35 an einem Stützrahmen 36 des Mähwerks 31 befestigt ist.

Zudem zeigen Figuren 5 und 6, dass das Mähwerk 31 genannten Stützrahmen 36 umfasst, an welchem Stützräder 37, 38 drehbar befestigt sind.

So hat das Mähwerk 31 also zwei Stützräder 37, 38, an deren Drehachsen jeweils ein Haltearm 3, 4 der Schutzeinrichtung 1 drehbar befestigt ist.

Der Stützrahmen 36 umfasst zwei Halteelemente 39, 40, jeweils ausgebildet als U-förmiger Haltebügel, an denen jeweils ein zweites Ende 35 des Feder- und Dämpferelements 32, 33 des Mähwerks 31 befestigt ist.

Dabei beabstandet der Stützrahmen 36 die Schutzeinrichtung 1 derart vom Erdboden E, dass die Scheuchelemente 17 der Scheucheinheit 2 der Schutzeinrichtung 1 kontaktlos über den Erdboden E verfahrbar sind.

Zudem sind zwei Haltearme 3, 4, zwei Feder- und Dämpferelemente 32, 33 und die zwei Halteelemente 39, 40 derart relativ zueinander positioniert und ausgebildet, dass die Schutzeinrichtung 1 in eine Beförderungsposition (vgl. Figuren 1 und 4) und in eine Insektenschutzposition (vgl. Figuren 2, 3 und 5, 6) bringbar ist.

In der Beförderungsposition hat die Schutzeinrichtung 1 einen ersten Abstand zum Mähwerk 31, wobei in der Beförderungsposition der zweite Rastmechanismus 19 der Schutzeinrichtung 1 verriegelt ist. Und zwar verbindet der Raststift 20 des zweiten Rastmechanismus 19 das erste Ende 5 eines Haltearms 3, 4 mit der Scheucheinheit 2, wodurch das zweite Ende 6 eines Haltearms 3, 4 einen ersten Abstand zum Mähwerk 31 aufweist.

In der Insektenschutzposition hingegen hat die Schutzeinrichtung 1 einen zweiten Abstand zum Mähwerk 31, wobei in der Insektenschutzposition der zweite Rastmechanismus 19 der Schutzeinrichtung 1 entriegelt ist (vgl. Figuren 2, 3 und 5, 6). Dabei löst jeder Raststift 20 des zweiten Rastmechanismus 19 die Verbindung zwischen dem ersten Ende 5 eines Haltearms 3, 4 und der Scheucheinheit 2, wodurch das zweite Ende 6 eines Haltearms 3, 4 einen zweiten Abstand zum Mähwerk 31 aufweist.

Wie bei Vergleich der Figuren 4 und 5 oder 1 mit 2 oder 3 zu erkennen, ist der erste Abstand zwischen Scheucheinheit 2 und Mähwerk 31 aus z. B. Figur 1 kleiner ist als der zweite Abstand zwischen Scheucheinheit 2 und Mähwerk 31 aus Figur 2. Dadurch kann Volumen eingespart werden, wodurch der Transport der Mähvorrichtung 30 einfacher durchführbar ist.

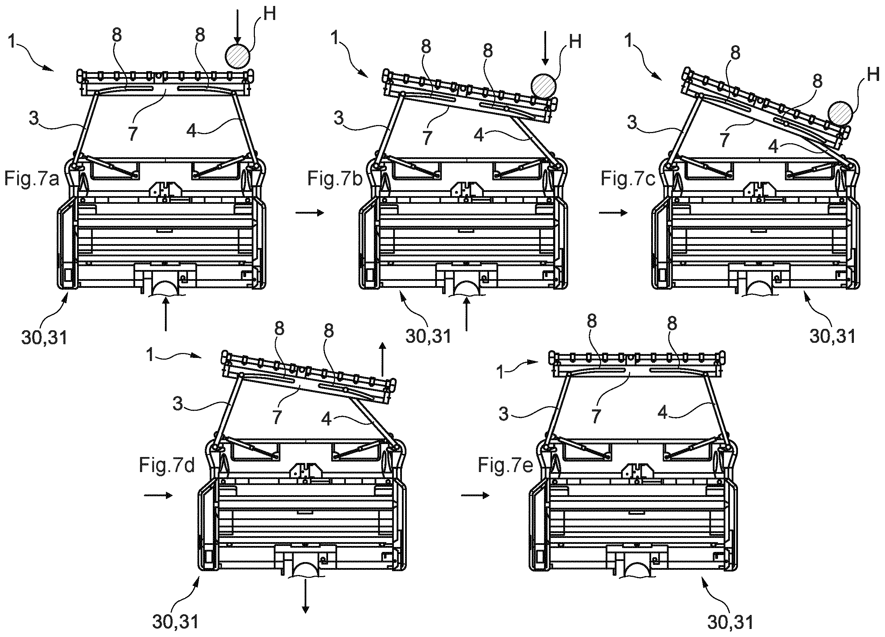

Gemäß Figur 6 ist die Mähvorrichtung 30 zum Mähen von Gras und/oder zum Aufnehmen von Laub so eingerichtet und ausgebildet, dass beim Kontaktieren eines Hindernisses H mit der Schutzeinrichtung 1 das Mähwerk 31 abschaltbar ist und/oder die Fahrgeschwindigkeit der Mähvorrichtung 30 reduzierbar ist. Ferner ist automatisch die Fahrtrichtung der Mähvorrichtung 30 umkehrbar, um die Mähvorrichtung 30 automatisch von einem Hindernis H zurückzusetzen (vgl. Figuren 7d)).

Dazu hat das Mähwerk 31 und die Schutzeinrichtung 1 jeweils eine Sensoreinrichtung (nicht dargestellt), die eine Bewegung der Schutzeinrichtung 1 und eine Bewegung des Mähwerks 31 erfassen kann. Hierbei weisen die Sensoreinrichtungen einen Beschleunigungsmesser auf.

Des Weiteren umfasst die Mähvorrichtung 30 eine Steuerungseinheit (nicht dargestellt), die mit den Sensoreinrichtungen verbunden ist, um die Daten der Sensoreinrichtungen zu erhalten.

Die Steuerungseinheit kann bei bestimmten Werten, die von den Sensoreinrichtungen empfangen werden, z. B. die Fahrgeschwindigkeit der Mähvorrichtung 30 reduzieren und/oder die Fahrtrichtung umkehren und/oder das Mähwerk abschalten.

Ebenso kann die Steuerungseinheit (nicht dargestellt) durch Vergleich der Daten der Sensoreinrichtung der Schutzeinrichtung 1 und einer Sensoreinrichtung des Mähwerks 31 dazu ausgebildet sein, die relative Beschleunigung der Schutzeinrichtung 1 zum Mähwerk 31 zu ermitteln, um somit auf ein Hindernis zu schließen. Auch ist somit eine noch genauere Erfassung eines Hindernisses, das gegen die Schutzeinrichtung 1 bzw. deren Scheucheinheit 2 fährt, erfassbar.

Nachstehend werden die Figuren 1 bis 7 nochmals aber mit anderen Worten geschildert.

So zeigen die Figuren 1 bis 7, dass ein Aggregat bzw. eine Schutzeinrichtung 1 vorne an einem Mähwerk 31 einer Mähvorrichtung 30 (z. B. auf Drehachsen von den Stützrädern 37, 38) aufgesetzt ist.

Beim Mähen wird das Gras vor dem Mähprozess durch den Zinkenträger bzw. durch den Träger 10 einer Scheucheinheit 2 der Schutzeinrichtung 1 geschüttelt, um fliegende Insekten im Gras zu erschrecken und aufzuscheuchen, sodass diese vor Schaden bewahrt werden können.

Ein Zinkenträger 10 bzw. der Träger 10 der Scheucheinheit 2 ist aus einen Rohr gebildet und weist Zinken bzw. Scheuchelemente 17 (Mähdrescher - Haspelzinken-Technologie) aus verformbaren Kunststoff auf.

Die Zinken bzw. Scheuchelemente 17 sind nicht mit dem Erdboden E im Kontakt. Der Zinkenträger bzw. Täger 10 ist drehbar in zwei Lagerungen 11, 12 gelagert. Der Träger 10 hat mehrere Positionen, die durch einen Rastbolzen 14 verstellbar sind.

So gibt es eine Transportposition (Zinken oben und nach hinten - vgl. Figuren 1 und 4), eine erste Arbeitsposition, in welcher kurzes und mittleres Gras (Zinken bzw. Scheuchelemente 17 unten angeordnet sind: zirka 10 cm über Erdboden E - vgl. Figur 2) gemäht werden kann und eine zweite Arbeitsposition, in welcher langes Gras (Zinken bzw. Scheuchelemente 17 unten und nach hinten angeordnet sind: zirka 25 cm über Erdboden E - vgl. Figur 3) gemäht werden kann.

Der Zinkenträger bzw. Träger 10 wird inklusive der Lagerungen 11, 12 an einem Querträger 7 befestigt. Der Querträger 7 beinhaltet zwei Kurvenbahnen bzw. Kulissenführungen 8, in denen zwei Stützarme 3, 4 bzw. Haltearme 3, 4 durch Bolzen 9 verschoben werden können.

Die Stützarme 3, 4 bzw. Haltearme 3, 4 sind auf Mähwerkstützrädern bzw. Stützrädern 37, 38 montiert und rotieren um deren Drehachsen. Die Stützarme 3, 4 werden seitlich durch Feder- und Dämpferelemente 32, 33 (deren Endpunkt am Mähwerkrahmen bzw. am Stützrahmen 36 des Mähwerks 31 der Mähvorrichtung 30 fixiert ist) gedämpft.

Die Kinematik ermöglicht zwei Positionen, nämlich eine eingeklappte Position bzw. eine Beförderungsposition und eine ausgeklappte Position bzw. eine Insektenschutzposition.

Die eingeklappte Position (inklusiv nach oben und hinten gedrehter Zinkenträger bzw. Scheuchelemente 17) dient als Beförderungsposition oder für einen Mähprozess ohne Insektenschutz. Das Aggregat bzw. die Schutzeinrichtung 1 kann somit auch für die Fahrt auf einer Straße genutzt werden. Die eingeklappte Position wird durch Klappstecker 20 bzw. Raststifte 20 verriegelt.

Die ausgeklappte Position dient als Insektenerschrecker bzw. als Insektenschutzposition. In dieser Position wird je nach Gras-Bedingungen die Position der Zinken bzw. der Scheuchelemente 17 ausgewählt, ob aggressiv (großer Winkel α - vgl. Figur 2) oder weniger aggressiv (kleiner Winkel β - vgl. Figur 3) gearbeitet wird.

Zwei Handgriffe ermöglichen eine ergonomische Betätigung des Aggregats bzw. der Schutzeinrichtung 1 (eingeklappt oder ausgeklappt).

Die Hin- und Her- oder Links- oder Rechts-Bewegung des Zinkenträgers bzw. des Tägers 10 wird von zwei Gummipuffern bzw. Anschlägen 18 mit Gummipuffern begrenzt.

Dank der verformbaren Zinken bzw. Scheuchelemente 17 und der Feder- und Dämpferelemente 32, 33 können sich bei einer Kollision mit einem Hindernis H die Zinken verformen und/oder das Aggregat 1 bzw. die gesamte Schutzeinrichtung 1 nachgeben, um die Mähvorrichtung 30 vor Schaden zu bewahren.

Falls das Hindernis H lebend ist, (Tier, Mensch), wird es vor Verletzung geschützt (vgl. Figuren 7a), b) und c)).

Nach einer Kollision mit dem Hindernis H und einer anschließenden Rückwärtsfahrt gelangt die Schutzeinrichtung 1 (dank der Feder- und Dämpferelemente 32, 33) in ihre ursprüngliche Position (vgl. Figuren 7d) und e)) zurück.

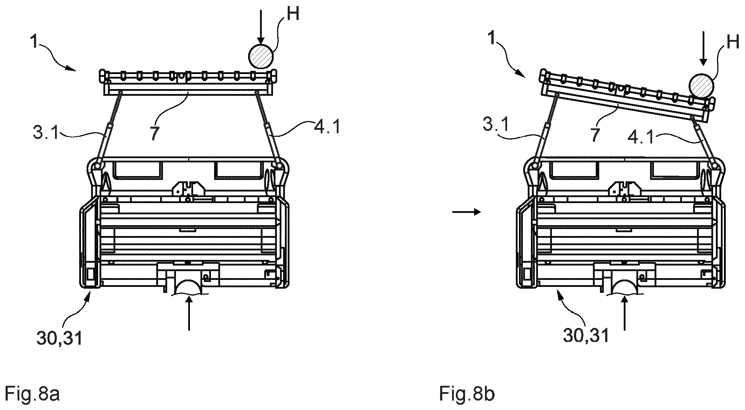

Ein anderes bzw. zweites erfindungsgemäßes Ausführungsbeispiel für die Mähvorrichtung 30 ist in den Figuren 8a und 8b gezeigt. Dieses unterscheidet sich im Wesentlichen durch die Ausführung der Haltearme 3.1, 4.1. Die Haltearme 3.1, 4.1 sind dabei längen-veränderlich, insbesondere teleskopierbar und/oder nach Art eines Feder- und/oder Dämpferelements, ausgebildet. Die Haltearme 3.1, 4.1 sind dabei dazu eingerichtet, deren Länge bei einer Kollision der Scheucheinheit 2 mit dem Hindernis H selbsttätig zu verändern. Insbesondere sind die Haltearme 3.1, 4.1 dabei dazu eingerichtet, deren ursprüngliche Länge und/oder Ausgangsstellung nach der Kollision selbsttätig wieder anzufahren und/oder einzunehmen. Hierbei sei explizit erwähnt, dass ein derartig ausgebildeter Haltearm 3.1, 4.1 auch mit den Merkmalen bzw. Merkmalskombinationen der Mähvorrichtung 30 gemäß den Ausführungsbeispielen in Figuren 1 bis 7e kombinierbar ist.

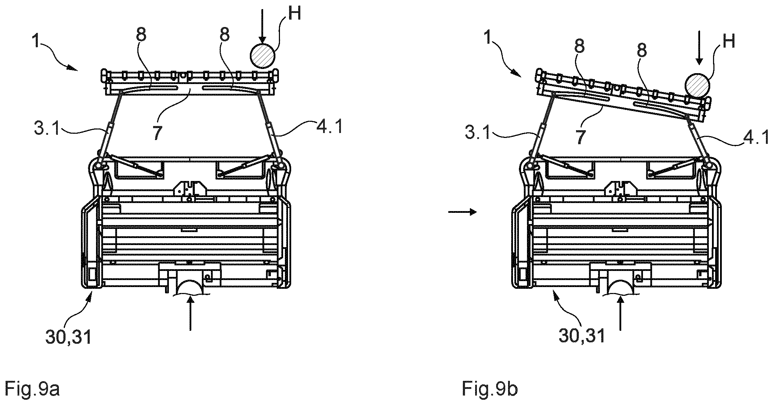

Ein weiteres anderes bzw. drittes erfindungsgemäßes Ausführungsbeispiel für die Mähvorrichtung 30 ist in den Figuren 9a und 9b gezeigt. Dieses zeigt eine Kombination der vorherigen Ausführungsbeispiel, insbesondere bei dem die längenveränderlichen Haltearme 3.1, 4.1 mit den Kulissenführungen 8 gekoppelt sind. In dem dargestellten Ausführungsbeispiel ist zu sehen, dass die Führung bzw. der Freiheitsgrad der Haltearme 3.1, 4.1, insbesondere der zweiten Enden 6, quer zur Fahrt- und/oder Arbeitsrichtung und im Betrieb bzw. Arbeitsposition gesperrt ist. Insbesondere ist dabei vorgesehen, dass die Führung bzw. der Freiheitsgrad quer zur Fahrt- und/oder Arbeitsrichtung zum Verstellen der Scheucheinheit 2 (manuell) freigebbar ist, beispielsweise um die Scheucheinheit 2 von der Arbeitsposition in die Transportposition bzw. Außerbetriebsstellung oder umgekehrt zu verstellen. Die relative Verschiebung der Scheucheinheit 2, bei Kollision mit einem Hindernis H, resultiert hierbei aus der Längenveränderung der Haltearme 3.1, 4.1. Alternativ oder zusätzlich zum gezeigten Ausführungsbeispielwäre auch denkbar, dass die Kulissenführungen 8 und damit die Führung bzw. der Freiheitsgrad der Haltearme 3.1, 4.1, insbesondere der zweiten Enden 6, während des Betriebs zumindest abschnittsweise entlang der Kulissenführungen 8 freigegeben ist. Bei einer derartigen alternativen oder zusätzlichen jedoch nicht gezeigten Ausführungsvariante resultiert die relative Verschiebung der Scheucheinheit 2, insbesondere des Querträgers 7, bei Kollision mit einem Hindernis H, aus der Längenveränderung der Haltearme 3.1, 4.1 und der zumindest abschnittsweisen Führung der zweiten Enden 6 entlang der Kulissenführungen 8.

Es versteht sich, dass in den zuvor beschriebenen Ausführungsbeispielen genannte Merkmale nicht auf diese speziellen Kombinationen beschränkt und im Rahmen der nachfolgenden Ansprüche auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

| | | | |
|---|---|---|---|
| 1 | Schutzeinrichtung | 21 | erste Durchführung |
| 2 | Scheucheinheit | 22 | Rasteinheit |
| 3 | erster Haltearm | 23 | Blech |
| 4 | zweiter Haltearm | 24 | zweite Durchführung |
| 5 | erstes Ende | | |
| 6 | zweites Ende | 30 | Mähvorrichtung |
| 7 | Querträger | 31 | Mähwerk |
| 8 | Kulissenführung | 32 | Feder- und Dämpferelement |
| 9 | Bolzen | 33 | Feder- und Dämpferelement |
| 10 | Träger | 34 | erstes Ende |
| 11 | Lager | 35 | zweites Ende |
| 12 | Lager | 36 | Stützrahmen |
| 13 | erster Rastmechanismus | 37 | Stützrad |
| 14 | Rastbolzen | 38 | Stützrad |
| 15 | Rastloch | 39 | Halteelement |
| 16 | Rastloch | 40 | Halteelement |
| 17 | Scheuchelement | | |
| 18 | Anschlag | E | Erdboden |
| 19 | zweiten Rastmechanismus | H | Hindernis |
| 20 | Raststift | | |

## Patentansprüche

1. Schutzeinrichtung (1) zum Aufscheuchen von Insekten und zum Einsatz an einem Mähwerk (31) einer Mähvorrichtung (30) aufweisend:
- eine Scheucheinheit (2), mit welcher Insekten auf- und/oder verscheuchbar sind,
- wenigstens einen Haltearm (3, 3.1, 4, 4.1) mit einem ersten und einem zweiten Ende (5, 6),
- wobei das erste Ende (5) an einem Mähwerk (31) einer Mähvorrichtung (30) befestigbar ist,
- und wobei das zweite Ende (6) derart mit der Scheucheinheit (2) verbunden ist, dass die Scheucheinheit (2) und der wenigstens eine Haltearm (3, 3.1, 4, 4.1) relativ zueinander drehbar und/oder verschiebbar sind,
**dadurch gekennzeichnet, dass**
- die Scheucheinheit (2) einen Querträger (7) umfasst, der für den wenigstens einen Haltearm (3, 3.1, 4, 4.1) eine Kulissenführung (8) aufweist, in welcher das zweite Ende (6) des wenigstens einen Haltearms (3, 3.1, 4, 4.1) angeordnet ist, und/oder
- der wenigstens eine Haltearm (3, 3.1, 4, 4.1) längen-veränderlich ausgebildet und dazu eingerichtet ist, seine Länge bei einer Kollision der Scheucheinheit mit einem Hindernis selbsttätig zu verändern.

2. Schutzeinrichtung nach Anspruch 1,
- wobei die Scheucheinheit (2) einen Träger (10) für wenigstens ein Scheuchelement (17) umfasst, und
- wobei der Träger (10) relativ drehbar ausgebildet und/oder gleichorientiert zu einem Querträger (7) der Scheucheinheit (2) ausgerichtet ist.

3. Schutzeinrichtung nach einem der vorangehenden Ansprüche,
- wobei die Scheucheinheit (2) einen ersten Rastmechanismus (13) aufweist, mit welchem wenigstens zwei unterschiedliche Positionen eines Trägers (10) der Scheucheinheit (2) relativ zu einem Querträger (7) der Scheucheinheit (2) einnehmbar oder einstellbar sind.

4. Schutzeinrichtung nach Anspruch 3,
- wobei mithilfe des ersten Rastmechanismus (13) eine Transportposition einstellbar ist, in welcher wenigstens ein Scheuchelement (17) der Scheucheinheit (2) entgegengesetzt zum Erdboden (E) orientiert ist, und
- wobei mithilfe des ersten Rastmechanismus (13) eine erste Arbeitsposition einstellbar ist, in welcher wenigstens ein Scheuchelement (17) der Scheucheinheit (2) unter einem ersten Winkel (α) zum Erdboden (E) orientiert ist.

5. Schutzeinrichtung nach einem der vorangehenden Ansprüche,
- wobei die Scheucheinheit (2) wenigstens ein Scheuchelement (17) umfasst,
- wobei das wenigstens eine Scheuchelement (17) an einem Träger (10) der Scheucheinheit (2) befestigt ist, und
- wobei das wenigstens eine Scheuchelement (17) als Federelement ausgebildet ist, das nach Krafteinwirkung in seine ursprüngliche Position zurückfedert.

6. Schutzeinrichtung nach einem der vorangehenden Ansprüche,
- wobei die Scheucheinheit (2) einen zweiten Rastmechanismus (19) aufweist, mit welchem die Scheucheinheit (2) an dem wenigstens einen Haltearm (3, 3.1, 4, 4.1) verrastbar ist, und
- wobei mit dem zweiten Rastmechanismus (19) der wenigstens eine Haltearm (3, 3.1, 4, 4.1) so fixierbar ist, dass ein relatives Verschieben oder Verdrehen zwischen Scheucheinheit (2) und wenigstens einem Haltearm (3, 3.1, 4, 4.1) unterbindbar ist.

7. Mähvorrichtung (30) zum Mähen von Gras und/oder zum Aufnehmen von Laub aufweisend:
- eine Schutzeinrichtung (1) nach einem der vorangehenden Ansprüche, und
- ein Mähwerk (31),
- wobei die Schutzeinrichtung (1) an dem Mähwerk (31) angeordnet ist.

8. Mähvorrichtung nach Anspruch 7,
- wobei das Mähwerk (31) ein Feder- und/oder Dämpferelement (32, 33) pro Haltearm (3, 3.1, 4, 4.1) der Schutzvorrichtung (1) aufweist, um die Haltearme (3, 3.1, 4, 4.1) in eine Insektenschutzposition vorzuspannen.

9. Mähvorrichtung nach einem der Ansprüche 7 oder 8,
- wobei das Mähwerk (31) einen Stützrahmen (36) umfasst,
- wobei der Stützrahmen (36) zwei Halteelemente (39, 40), jeweils ausbildbar als U-förmiger Haltebügel, umfasst, an denen jeweils ein zweites Ende (35) eines Feder- und/oder Dämpferelements (32, 33) des Mähwerks (31) befestigt ist, und
- wobei die zwei Haltearme (3, 3.1, 4, 4.1) der Schutzeinrichtung (1), zwei Federund/oder Dämpferelemente (32, 33) und die zwei Halteelemente (39, 40) derart relativ zueinander positioniert und ausgebildet sind, dass die Schutzeinrichtung (1) in eine Beförderungsposition und in eine Insektenschutzposition bringbar ist.

10. Mähvorrichtung nach einem der Ansprüche 7 bis 9,
- wobei die Mähvorrichtung eingerichtet und ausgebildet ist, dass beim Kontaktieren eines Hindernisses (H) mit der Schutzeinrichtung (1) das Mähwerk (31) abschaltbar ist und/oder die Fahrgeschwindigkeit der Mähvorrichtung (30) reduzierbar ist und/oder automatisch die Fahrtrichtung der Mähvorrichtung (30) umkehrbar ist.

## Claims

1. Protective device (1) for scaring away insects and for use on a mower (31) of a mowing apparatus (30), the protective device comprising:
- a scaring unit (2) by means of which insects can be startled and/or scared away,
- at least one holding arm (3, 3.1, 4, 4.1) having a first and a second end (5, 6),
- wherein the first end (5) can be fastened to a mower (31) of a mowing apparatus (30),
- and wherein the second end (6) is connected to the scaring unit (2) such that the scaring unit (2) and the at least one holding arm (3, 3.1, 4, 4.1) are rotatable and/or displaceable relative to one another,
**characterized in that**
- the scaring unit (2) comprises a cross member (7) which has for the at least one holding arm (3, 3.1, 4, 4.1) a slotted guide (8) in which the second end (6) of the at least one holding arm (3, 3.1, 4, 4.1) is arranged, and/or
- the at least one holding arm (3, 3.1, 4, 4.1) is designed to be variable in length and is configured to automatically change its length in the event of a collision of the scaring unit with an obstacle.

2. Protective device according to claim 1,
- wherein the scaring unit (2) comprises a support (10) for at least one scaring element (17), and
- wherein the support (10) is designed to be relatively rotatable and/or is aligned so as to be identically oriented with respect to a cross member (7) of the scaring unit (2).

3. Protective device according to any of the preceding claims,
- wherein the scaring unit (2) comprises a first latching mechanism (13) by means of which at least two different positions of a support (10) of the scaring unit (2) relative to a cross member (7) of the scaring unit (2) can be assumed or set.

4. Protective device according to claim 3,
- wherein, by means of the first latching mechanism (13), a transport position can be set in which at least one scaring element (17) of the scaring unit (2) is oriented counter to the ground (E), and
- wherein, by means of the first latching mechanism (13), a first working position can be set in which at least one scaring element (17) of the scaring unit (2) is oriented at a first angle (α) to the ground (E).

5. Protective device according to any of the preceding claims,
- wherein the scaring unit (2) comprises at least one scaring element (17),
- wherein the at least one scaring element (17) is fastened to a support (10) of the scaring unit (2), and
- wherein the at least one scaring element (17) is in the form of a spring element which springs back into its original position after the application of force.

6. Protective device according to any of the preceding claims,
- wherein the scaring unit (2) comprises a second latching mechanism (19) by means of which the scaring unit (2) can be latched to the at least one holding arm (3, 3.1, 4, 4.1), and
- wherein the at least one holding arm (3, 3.1, 4, 4.1) can be fixed by means of the second latching mechanism (19) such that a relative displacement or twisting between the scaring unit (2) and at least one holding arm (3, 3.1, 4, 4.1) can be prevented.

7. Mowing apparatus (30) for mowing grass and/or collecting leaves, comprising:
- a protective device (1) according to any of the preceding claims; and
- a mower (31),
- wherein the protective device (1) is arranged on the mower (31).

8. Mowing apparatus according to claim 7,
- wherein the mower (31) comprises a spring and/or damper element (32, 33) for each holding arm (3, 3.1, 4, 4.1) of the protective device (1) in order to preload the holding arms (3, 3.1, 4, 4.1) into an insect protection position.

9. Mowing apparatus according to claim 7 or 8,
- wherein the mower (31) comprises a support frame (36),
- wherein the support frame (36) comprises two holding elements (39, 40), each of which can be in the form of a U-shaped holding bracket, on each of which a second end (35) of a spring and/or damper element (32, 33) of the mower (31) is fastened, and
- wherein the two holding arms (3, 3.1, 4, 4.1) of the protective device (1), two spring and/or damper elements (32, 33), and the two holding elements (39, 40) are positioned relative to one another such and designed such that the protective device (1) can be brought into a transport position and into an insect protection position.

10. Mowing apparatus according to any of claims 7 to 9,
- wherein the mowing apparatus is configured and designed such that when an obstacle (H) comes into contact with the protective device (1), the mower (31) can be switched off and/or the travel speed of the mower (30) can be reduced and/or the travel direction of the mowing apparatus (30) can be automatically reversed.

## Revendications

1. Dispositif de protection (1) destiné à effrayer les insectes et à être utilisé sur un mécanisme de fauchage (31) d'un dispositif de fauchage (30), présentant :
- une unité d'effarouchement (2) permettant d'effrayer et/ou de chasser les insectes,
- au moins un bras de retenue (3, 3.1, 4, 4.1) comportant une première et une seconde extrémité (5, 6),
- la première extrémité (5) pouvant être fixée à un mécanisme de fauchage (31) d'un dispositif de fauchage (30),
- et la seconde extrémité (6) étant reliée à l'unité d'effarouchement (2) de telle sorte que l'unité d'effarouchement (2) et l'au moins un bras de retenue (3, 3.1, 4, 4.1) peuvent tourner et/ou coulisser l'un par rapport à l'autre,
**caractérisé en ce que**
- l'unité d'effarouchement (2) comprend un support transversal (7) qui présente, pour l'au moins un bras de retenue (3, 3.1, 4, 4.1), un guidage à coulisse (8) dans lequel est disposée la seconde extrémité (6) de l'au moins un bras de retenue (3, 3.1, 4, 4.1) et/ou
- l'au moins un bras de retenue (3, 3.1, 4, 4.1) est réalisé de manière à pouvoir être modifié en longueur et conçu pour modifier automatiquement sa longueur en cas de collision de l'unité d'effarouchement avec un obstacle.

2. Dispositif de protection selon la revendication 1,
- dans lequel l'unité d'effarouchement (2) comprend un support (10) pour au moins un élément d'effarouchement (17) et
- dans lequel le support (10) est réalisé de manière à pouvoir tourner par rapport à un support transversal (7) de l'unité d'effarouchement (2) et/ou est dirigé dans la même orientation que celui-ci.

3. Dispositif de protection selon l'une des revendications précédentes,
- dans lequel l'unité d'effarouchement (2) présente un premier mécanisme d'encliquetage (13) permettant d'occuper ou de régler au moins deux positions différentes d'un support (10) de l'unité d'effarouchement (2) par rapport à un support transversal (7) de l'unité d'effarouchement (2).

4. Dispositif de protection selon la revendication 3,
- dans lequel, à l'aide du premier mécanisme d'encliquetage (13), une position de transport peut être réglée, dans laquelle au moins un élément d'effarouchement (17) de l'unité d'effarouchement (2) est orienté à l'opposé du sol (E) et
- dans lequel, à l'aide du premier mécanisme d'encliquetage (13), une première position de travail peut être réglée, dans laquelle au moins un élément d'effarouchement (17) de l'unité d'effarouchement (2) est orienté selon un premier angle (α) par rapport au sol (E).

5. Dispositif de protection selon l'une des revendications précédentes,
- dans lequel l'unité d'effarouchement (2) comprend au moins un élément d'effarouchement (17),
- dans lequel l'au moins un élément d'effarouchement (17) est fixé à un support (10) de l'unité d'effarouchement (2) et
- dans lequel l'au moins un élément d'effarouchement (17) est réalisé sous la forme d'un élément à ressort qui revient élastiquement dans sa position initiale après l'application d'une force.

6. Dispositif de protection selon l'une des revendications précédentes,
- dans lequel l'unité d'effarouchement (2) présente un second mécanisme d'encliquetage (19) permettant d'encliqueter l'unité d'effarouchement (2) sur l'au moins un bras de retenue (3, 3.1, 4, 4.1) et
- dans lequel le second mécanisme d'encliquetage (19) permet de fixer l'au moins un bras de retenue (3, 3.1, 4, 4.1) de telle sorte qu'un coulissement relatif ou une rotation relative entre l'unité d'effarouchement (2) et l'au moins un bras de retenue (3, 3.1, 4, 4.1) peut être supprimé(e).

7. Dispositif de fauchage (30) destiné à faucher l'herbe et/ou à ramasser les feuilles, présentant :
- un dispositif de protection (1) selon l'une des revendications précédentes, et
- un mécanisme de fauchage (31),
- dans lequel le dispositif de protection (1) est disposé sur le mécanisme de fauchage (31).

8. Dispositif de fauchage selon la revendication 7,
- dans lequel le mécanisme de fauchage (31) présente un élément à ressort et/ou d'amortissement (32, 33) par bras de retenue (3, 3.1, 4, 4.1) du dispositif de protection (1), afin de précontraindre les bras de retenue (3, 3.1, 4, 4.1) dans une position de protection des insectes.

9. Dispositif de fauchage selon l'une des revendications 7 ou 8,
- dans lequel le mécanisme de fauchage (31) comprend un cadre support (36),
- dans lequel le cadre support (36) comprend deux éléments de retenue (39, 40), pouvant être réalisés respectivement comme un étrier de retenue en forme de U, sur lesquels est fixée respectivement une seconde extrémité (35) d'un élément à ressort et/ou d'amortissement (32, 33) du mécanisme de fauchage (31) et
- dans lequel les deux bras de retenue (3, 3.1, 4, 4.1) du dispositif de protection (1), les deux éléments à ressort et/ou d'amortissement (32, 33) et les deux éléments de retenue (39, 40) sont positionnés et réalisés les uns par rapport aux autres de telle sorte que le dispositif de protection (1) peut être amené dans une position de transport et dans une position de protection des insectes.

10. Dispositif de fauchage selon l'une des revendications 7 à 9,
- dans lequel le dispositif de fauchage est conçu et réalisé de telle sorte que, lors du contact d'un obstacle (H) par le dispositif de protection (1), le mécanisme de fauchage (31) peut être désactivé et/ou la vitesse de déplacement du dispositif de fauchage (30) peut être réduite et/ou le sens de déplacement du dispositif de fauchage (30) peut être automatiquement inversé.
